# EUROPEAN PATENT APPLICATION

(11) **EP 2 597 455 A1**
(43) Date of publication of application: **29.05.2013**
(21) Application number: 12193819.5
(22) Date of filing: 22.11.2012
(51) Int. Cl.: G01N 21/25, G01N 21/47, G01B 11/30, G01J 3/00

(54) **Apparatus and method of specular reflection compensation for a spectrophotometer, as well as colour measurement system comprising the same apparatus**

(30) Priority: 25.11.2011 IT MI20112154
(71) Applicant: Dromont S.p.A., 12060 Grinzane Cavour (CN) (IT)
(72) Inventor: Drocco, Luca, 12051 ALBA (CN) (IT); Drocco, Mario, 12051 ALBA (CN) (IT); Masayuki, Osumi, KUMAMOTO CITY, Kumamoto 862-0955 (JP)
(74) Representative: Lotti, Giorgio

(57) **Abstract**

Apparatus (30) of specular reflection compensation for a spectrophotometer (20), the spectrophotometer (20) being arranged to irradiate the surface of a sample (12) with illuminant light, detect the radiation scattered by the surface of the sample (12) following such irradiation, and then determine the reflectance of the surface of the sample (12), the apparatus (30) comprising roughness detection means (31, 35) arranged for detecting the roughness geometric profile of the surface of the sample (12), a processing unit (33) connected to the roughness detection means (31, 32), the processing unit (33) being arranged to determine a compensated reflectance of the surface on the basis of the scattered radiation detected by the spectrophotometer (20) and of the detected roughness.

## Description

The present invention refers to an apparatus and a method of specular reflection compensation for a spectrophotometer particularly but not exclusively used for the colour analysis of wet and liquid products surfaces.

The invention refers also to a colour measurement system comprising the compensation apparatus, particularly exploited in the field of liquid products manufacturing, such as decorative paints, varnishes, plasters, inks, coatings, cosmetics, food and any kind of coloured dispersions, emulsion and suspension. Modern coloured products manufacturing is basically made by an automatic colour dispensing system able to add precise quantities of colorants, additives, binders, converters and others chemicals that are mixed together. Nevertheless, the resulting colour could have a different hue or lightness with respect to those of a previous production, because many variables take place in wet colour products manufacturing.

Hence, in a common paint production factory an accurate colour control is carried out; in particular, the colour control is performed by taking a sample of paint, making a panel, drying such panel to obtain paint film and comparing it with the target one. This method however takes long time expenditure and it is highly costly.

It is known to carry out spectrophotometric reflectance analyses, through spectrophotometers, on the individual container, filled up with manufactured product, for example a paint or a cream.

Such spectrophotometric analyses can be carried out in the quality control laboratory, analysing dry film of the coloured wet product, or directly on wet product. The spectrophotometric analysis on the wet products can be performed in the production line as well, after the dispensing and mixing steps; in such cases, the telemetric spectrophotometric apparatuses are connected to remote monitoring units and the results are displayed in real time on a monitor or other visualization means.

Spectrophotometric measurement shows many advantages in the coloured products analysis. The spectrophotometer, in fact, permits to have an almost full automatic control of the coloured wet products, such as paint, varnish, ink, coatings, plasters, and any coloured emulsion and suspension. This control of the coloured wet products can be obtained in each one of intermediate or final production containers, such as tank, fix and mobile vessel, pail, can, tin, drum, buckets. Moreover, thanks to the spectrophotometric measurements, it is possible to achieve a higher repeatability and faster colour control with respect to the traditional colour measurement method, even on dry paint film in quality control laboratory except for the drying operation of the film itself. Finally, spectrophotometric measurements give fast and reliable colour judgement, that can be exploited during the wet products manufacturing.

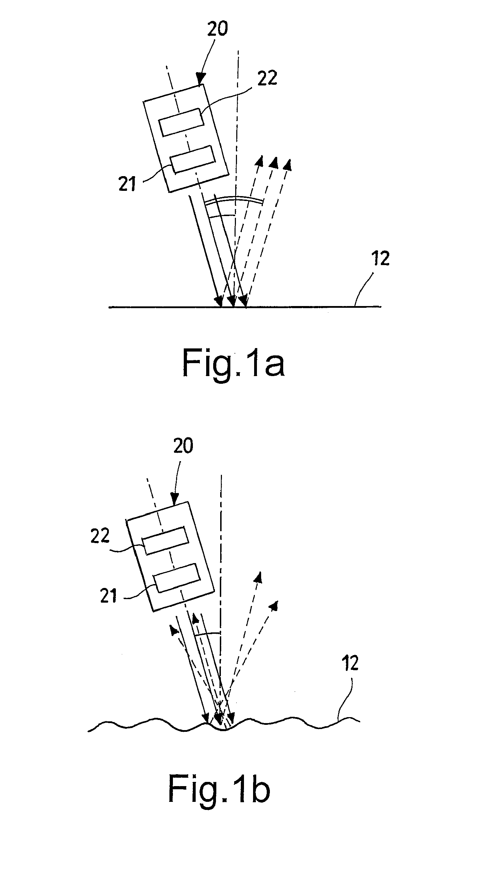

The spectrophotometer measurements methodology is usually applied in the colour evaluation of both flat or irregular surfaces; nevertheless, if the surface is irregular, the presence of unevenness, such as bubble, dust and roughness, can invalidate the measurement, and therefore high repeatability and high accurate judgement are not guaranteed. An irregular surface, in fact, generates uncontrolled specular reflections which are detected from the spectrophotometer and modify the estimated value reflectance factor, generating an error. This phenomenon is schematically showed in Figures 1a and 1b. In particular in figure 1a it is shown a spectrophotometer placed with an angle of, for example, 22,5° with respect to the perpendicular direction to the surface; the spectrophotometer emits an illuminant light that propagates towards the surface at an incident angle. Since this surface is flat or smooth the specularly reflected radiation propagates at an angle specular with respect to the incident angle; thus, the spectrophotometer is able to avoid the detection of specularly reflected radiation when the surface is flat or smooth.

Differently, in figure 1b it is shown a spectrophotometer placed as in figure 1a and a roughness surface. In such a case there can be, as illustrated, specular reflections that propagates at an angle almost equal to the incident angle of the illuminant light. Thus, the spectrophotometer detects also specular reflection radiation that invalidates the measurement.

The uncontrolled specular reflections are more intense in wet products than in dry products, because of the presence of the solvent, such as water or any other solvents.

In fact, in the wet products manufacturing roughness surface can be linked to the presence of solid particles into the liquid product, such as mineral particles, or to the high viscosity.

The spectrophotometers are capable of providing very accurate measurements when the surface under examination is substantially smooth, but in the irregular surfaces detection, there is a random error that depends on the random distribution of the surface irregularity. For example, performing a colorimetric investigation on a plurality of containers of liquid paints, the error due to the surface irregularities, will vary from container to container and from a portion of the product surface to another one, in the same container as well.

Therefore, the spectrophotometric investigations on wet products with an irregular surface are influenced by specular components, that must be avoided to get accurate and reliable colour measurements.

The purpose of the present invention is to avoid the aforementioned drawbacks and in particular to devise an apparatus and a method of specular reflection compensation for a spectrophotometer capable of measuring colours of a product taking into account its surface roughness or irregularity.

Another purpose of the present invention is to create a colour measurement system capable of providing accurate colour measurements in real time even in the case of wet and/or liquid products.

This and other purposes according to the present invention are accomplished by making an apparatus and a method of specular reflection compensation for a spectrophotometer as outlined in the independent claims 1 and 8.

Similarly, the purposes according to the present invention are accomplished by colour measurement system as defined in claim 6.

Further characteristics of the apparatus and the method of specular reflection compensation for a spectrophotometer, as well as of the colour measurement system, are the object of the dependent claims.

The characteristics and advantages of an apparatus and a method of specular reflection compensation for a spectrophotometer, as well as of the colour measurement system according to the present invention will become clearer from the following description, given as an example and not for limiting purposes, referring to the attached schematic drawings, in which:
- figure 1a is a schematic representation of the illuminant light emitted by a spectrophotometer towards a smooth surface and of the corresponding specularly reflected radiation, wherein the illuminant light emitted by a spectrophotometer being represented by a continuous line-arrow, while the specularly reflected radiation being represented by a dashed line-arrow;
- figure 1b is a schematic graphical representation of the illuminant light emitted by a spectrophotometer towards an irregular surface and of the corresponding specularly reflected radiation, wherein the illuminant light emitted by a spectrophotometer being represented by a continuous line-arrow, while the specularly reflected radiation being represented by a dashed line-arrow;
- figures 2a and 2b are two schematic representations of two embodiments of the colour measurement system according to the present invention;

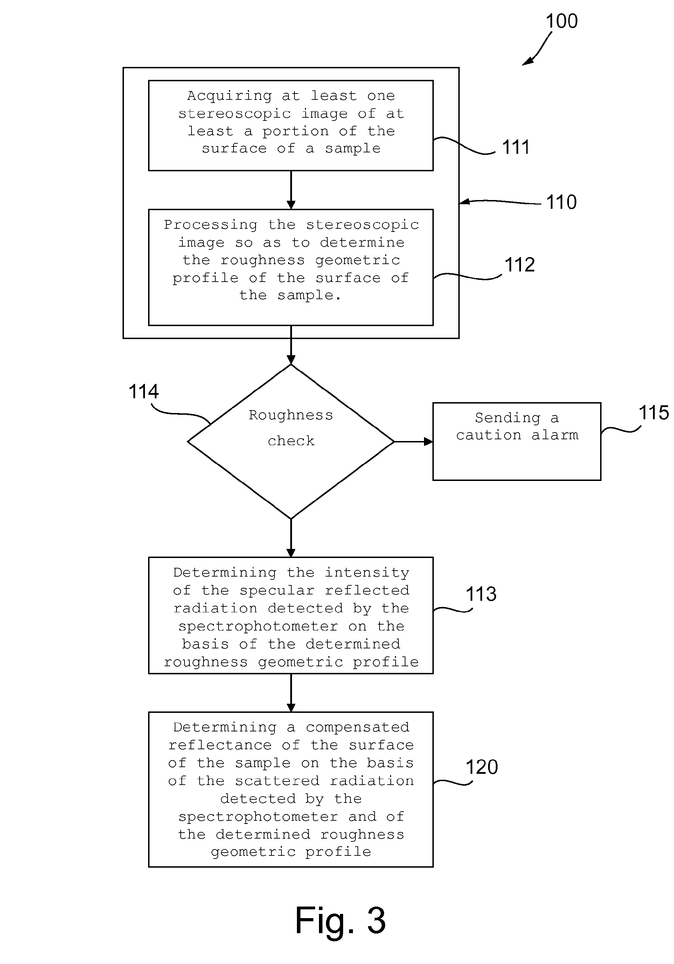

- figure 3 is a flow chart concerning an embodiment of the method of specular reflection compensation according to the present invention.

With reference to the attached figures, a colour measurement system is shown, wholly indicated with 10. Such colour measurement system 10 comprises a spectrophotometer 20 arranged above a container 11 that contains for example a wet and/or liquid sample 12, such as a wet paint.

In particular the spectrophotometer 20 is arranged to irradiate the surface of the sample 12 with illuminant light, detect the radiation scattered by the surface of said sample following such irradiation, and then determine the reflectance of the surface of the sample 12.

From the reflectance it is possible to determine the coordinates value in a colour space, that bring the information about the colour in terms of hue, chroma, lightness and so on.

Preferably, illuminant light is visible light at wavelengths between about 380 nm and 780 nm.

Preferably, the spectrophotometer 20 comprises at least a first illuminant unit 21, comprising for example an incandescent electric bulb, for the emission of the illuminant light, and at least one detector unit 22, comprising for example photo cells, or photodiodes, or photodiode array detector or PAD, or any other photosensitive devices.

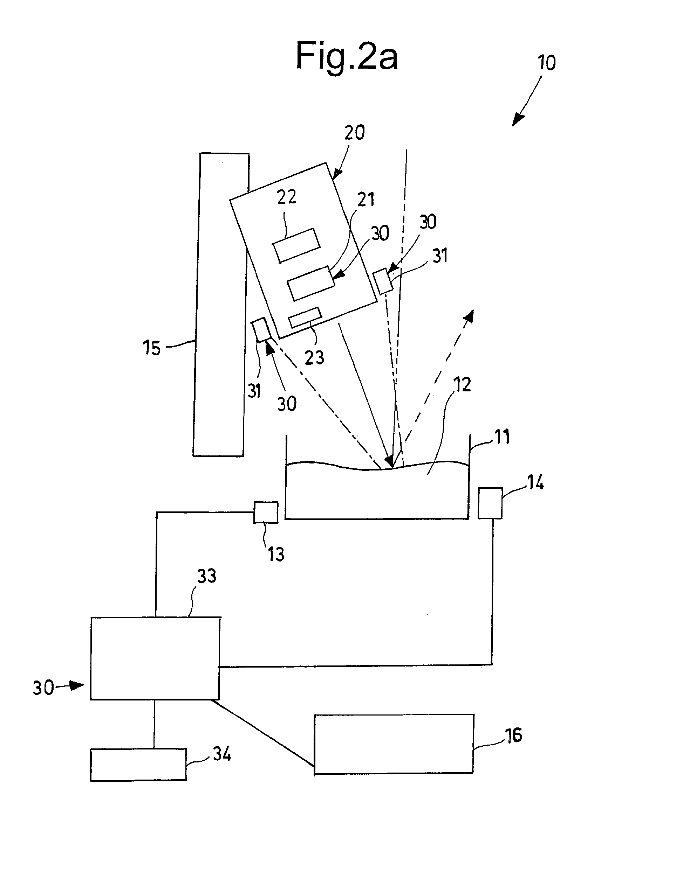

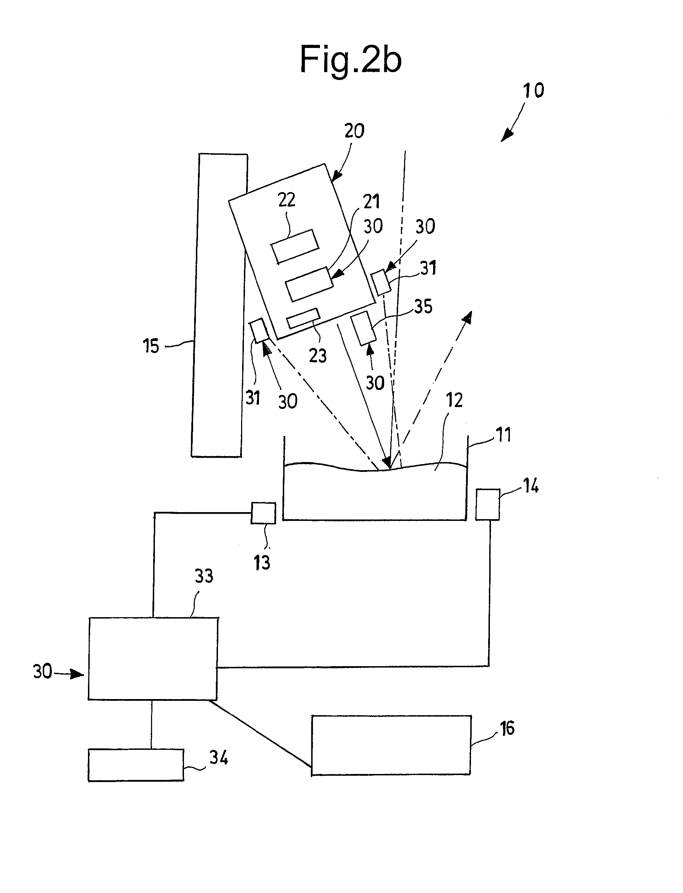

As shown in figure 2, the spectrophotometer 20 is positioned and arranged to detect the scattered radiation only if the surface of the sample under investigation is smooth.

According to the present invention the colour measurement system 10 comprises an apparatus 30 of specular reflection compensation.

According to the present invention the apparatus 30 of specular reflection compensation comprises roughness detection means 31, 35 arranged for determining the roughness geometric profile of the surface of the sample 12 and a processing unit 33 connected to the roughness detection means 31, 35. Advantageously, the processing unit 33 is arranged to determine a compensated reflectance of the surface of the sample 12 on the basis of the scattered radiation detected by the spectrophotometer 20 and of the determined roughness.

It is underlined that the roughness geometric profile can be three-dimensional.

Preferably, the apparatus 30 comprises also memory means 34 in which data relating the intensity of the specularly reflected radiation with the roughness geometric profile are stored. In such case the processing unit 33 determines the compensated reflectance of the surface of the sample 12 also on the basis of those stored data.

Preferably, the roughness detection means 31, 35 comprises image acquisition means 31 connected to the processing unit 33 and at least a second illuminant unit 35.

Advantageously, the image acquisition means 31 are arranged to acquire at least one stereoscopic image of at least a portion of the surface of the sample 12; in this case the processing unit 33 is arranged for processing the at least one stereoscopic image so as to determine the roughness geometric profile of the surface. Moreover the processing unit 33 is also arranged for determining the intensity of the specularly reflected radiation detected by the spectrophotometer 20 on the basis of the data stored in the memory means 34; in this way the processing unit 33 is capable of determining the compensated reflectance of the surface of the sample 12.

It is underlined that the processing unit 33 implements a mathematical model obtained from a statistical analysis of the light scattered by a plurality of different samples. Thanks to such a mathematical model the processing unit 33 is capable of foreseeing the portion of the specularly reflected radiation for all types of roughness in the paints.

Preferably the image acquisition means 31 comprise at least one camera for example at least one photo-cameras, at least one tv cameras, at least one video recorder and any other devices capable of catching images or to provide three-dimensional images.

It is underlined that several different configurations of roughness detection means 31, 35 can advantageously be implemented. As an example the roughness detection means 31, 35 can comprise one or more cameras and one or more illuminant units. In the particular embodiment shown in figure 2a the second illuminant unit coincides with the first illuminant unit 21 comprised in the spectrophotometer 20. Differently, according to figure 2b the roughness detection means 31, 35 can comprise two or more cameras, a first illuminant unit 21 and a second or more illuminant unit 35 arranged separately from the spectrophotometer 20.

In a particular embodiment of the present invention the image acquisition means 31 are fixed to the spectrophotometer 20 or close to it, so that it can operate in an integrated manner with it. Alternatively the image acquisition means 31 can be arranged outside the spectrophotometer 20 in a position facing the surface of the sample 12, as shown in figure 2. Preferably in the memory means 34 historical roughness tolerance data can also be stored. In such case the processing unit 33 is arranged to compare the determined roughness geometric profile of the surface of the sample 12 with historical tolerance data stored in memory means 34. In this case the processing unit 33 is also arranged for sending a caution alarm signal to warning means (not illustrated) if the determined roughness geometric profile exceeds the tolerance data. Preferably, the colour measurement system 10 comprises a first sensor 13 suitable for detecting the presence of the container 11 and sending a corresponding signal to the processing unit 33.

In such case the colour measurement system 10 also comprises a means for identifying 14 the container 11. In the particular case in which the container 11 is identified by a bar code the identification means 14 preferably comprise a bar code reader.

Preferably the colour measurement system 10 comprises a second sensor 23 suitable for measuring the distance at which is placed the spectrophotometer 20 with respect to the surface of the sample 12. In this case the colour measurement system 10 comprises a slider element 15 connected to the spectrophotometer 20 arranged for adjusting, on the basis of the measurements of the second sensor 23, the distance of the spectrophotometer 20 with respect to the surface of the sample 12, so as to obtain the same distance for all the measurements. The second sensor 23 can be integrated in the spectrophotometer 20 as illustrated in figure 2 or can be arranged outside the spectrophotometer 20 in a position facing the surface of the sample 12. Preferably the colour measurement system 10 comprises means for displaying 16 the colour measurement results. Preferably in the memory means 34 standard reference colorimetric data about target colours can also be stored. In such case the processing unit 33 is arranged to determine a colour correction formula to be sent to the dispensing machine, if the difference between the measured colour and a target colour exceeds a predetermined tolerance value for the colour itself.

The functioning of the colour measurement system 10 is the following.

The container 11 of the sample 12 arrives to colour measurement system 10 after the dispensing and mixing of chemicals by means of a dispenser and mixer machine. Then, the first sensor 13 detects the presence of the container 11 and consequently the identification means 14 identify the container 11. Following the identification of the container 11 the processing unit 33 loads from memory means 34 the corresponding standard reference colorimetric data and historical roughness tolerance and colour data.

The slider element 15 regulates, on the basis of the measurements of the second sensor 23, the distance of the spectrophotometer 20 with respect to the surface of the sample 12.

Successively, the spectrophotometer 20 performs the colour measurement. In particular the spectrophotometer 20 irradiates the surface of the sample 12 with an illuminant light, detects the radiation scattered by the surface of the sample 12 and determines the reflectance of the surface. Advantageously the colour measurement system according to the present invention is capable of implementing the method 100 of specular reflection compensation.

According to the present invention, such method comprises the steps of determining 110 the roughness geometric profile of the surface of the sample 12 and determining 120 a compensated reflectance of the surface on the basis of the scattered radiation detected by the spectrophotometer 20 and of the determined roughness geometric profile.

In particular, the step of roughness determination 110 preferably comprises the steps of acquiring 111 at least one stereoscopic image of at least a portion of the surface of the sample 12, processing 112 this image so as to determine the roughness geometric profile of the surface of the sample 12. Then the compensation method 100 comprises the step of determining 113 the intensity of the specularly reflected radiation detected by the spectrophotometer 20 on the basis of the determined roughness geometric profile.

Preferably, the method 100 of specular reflection compensation comprises the steps of comparing 114 the roughness geometric profile detected with the historical roughness data stored in the memory means 34. If the roughness geometric profile exceeds predefined tolerance data the compensation method comprises the step of sending 115 a caution alarm; in such case the specular reflection compensation is not executed. Differently, if the roughness geometric profile is within the tolerance the determining of the compensated reflectance takes place.

Anyway, after the execution of the method of specular reflection compensation the processing unit 33 determines the sample colour and compares it with the corresponding standard reference colorimetric data, i.e. with a target colour.

Hence the colour of the sample 12 is judged and the results are visualized on displaying means 16 then stored in the memory means 34 for future tracking; if the difference between the colour evaluated by the colour measurement system 10 and the target colour exceeds a predetermined tolerance, then the processing unit 33 determines a colour correction formula that is sent to the dispensing machine in order to obtain a sample of the desired colour. This means that the processor unit 33 is capable of correcting the registered reflectance curve and of showing the correct one on the displaying means 16.

From the description that has been made, the characteristics of the apparatus and method of specular reflection compensation for a spectrophotometer, object of the present invention, are clear, just as the relative advantages are also clear.

Similarly, the advantages and characteristics of the colour measurement system according to the present invention are clear.

Indeed, the apparatus, according to the present invention, makes it possible to minimise the measurement error due to the surface roughness of the sample. The colour measurement system provided with such a compensation apparatus is thus able to provide measurements of the reflectance factor with a high degree of accuracy.

In the particular field of the production of paints and/or varnishes, the colour measurement system according to the invention is able to provide very precise and accurate indications on the colours of the different paints and/or varnishes. This makes it possible to monitor the quality of production in real time, offering a substantial saving of time and costs. It is, thus, possible to apply the colour measurement system along the production line to perform colour measurements directly on all types of production containers, such as steady tank, mobile vessel, drum, pail, can and so on, even in presence of rough surface to be measured. It is also possible to apply the colour measurement system for off-line applications, such as in batch processes, in laboratory and in blending analysis. Consequently, the production line eliminates interruptions due to colour mistakes.

Finally, it is clear that the apparatus and method of specular reflection compensation for a spectrophotometer, as well as the colour measurement system this conceived can undergo numerous modifications and variants, all of which are covered by the invention; moreover, all of the details can be replaced with technically equivalent elements. In practice, the materials used, as well as the sizes, can be whatever according to the technical requirements.

## Claims

1. Apparatus (30) of specular reflection compensation for a spectrophotometer (20), said spectrophotometer (20) being arranged to irradiate the surface of a sample (12) with illuminant light, detect the radiation scattered by the surface of said sample (12) following such irradiation, and then determine the reflectance of the surface of said sample (12), said apparatus (30) comprising:
- roughness detection means (31, 35) arranged for detecting the roughness geometric profile of the surface of said sample (12);
- a processing unit (33) connected to said roughness detection means (31, 35), said processing unit (33) being arranged to determine a compensated reflectance of said surface on the basis of said scattered radiation detected by said spectrophotometer (20) and of said detected roughness.

2. Apparatus (30) according to claim 1 wherein it comprises memory means (34) in which data relating the intensity of the specularly reflected radiation with the roughness geometric profile are stored, said processing unit (33) determining the compensated reflectance of said surface also on the basis of said stored data.

3. Apparatus (30) according to claim 2 wherein said roughness detection means (31, 35) comprise:
- image acquisition means (31) connected to said processing unit (33), said image acquisition means (31) being arranged to acquire at least one stereoscopic image of at least a portion of the surface of said sample (12), and at least a second illuminant unit (35), said processing unit (33) being arranged for processing said at least one stereoscopic image so as to determine the roughness geometric profile of said surface, said processing unit (33) being also arranged for determining the intensity of the specularly reflected radiation detected by said spectrophotometer (20) on the basis of said data stored in said memory means (34).

4. Apparatus (30) according to claim 3 wherein said roughness detection means (31, 35) comprise one or more cameras (31) and one or more illuminant units (35).

5. Apparatus (30) according to any one of the claims from 2 to 4 wherein in said memory means (34) historical roughness tolerance data are stored and the processing unit (33) is arranged to compare the determined roughness geometric profile of the surface of said sample (12) with said historical roughness tolerance data stored in said memory means (34), said processing unit (33) being also arranged for sending a caution alarm signal to warning means if the determined roughness geometric profile exceeds the tolerance data.

6. Colour measurement system (10) comprising:
- a spectrophotometer (20) arranged to irradiate the surface of a sample (12) with illuminant light, detect the radiation scattered by the surface of said sample (12) following such irradiation, and then determine the reflectance of the surface of said sample (12);
- an apparatus (30) of specular reflection compensation according to one or more of the preceding claims.

7. Colour measurement system (10) according to claim 6 wherein it comprises:
- a second sensor (23) suitable for measuring the distance at which is placed said spectrophotometer (20) with respect to the surface of said sample (12);
- a slider element (15) connected to said spectrophotometer (20) arranged for adjusting, on the basis of the measurements of said second sensor (23), the distance of said spectrophotometer (20) with respect to the surface of said sample (12), so as to have the same distance for all the measurements.

8. Method (100) of specular reflection compensation for a spectrophotometer (20), said spectrophotometer (20) being arranged to irradiate the surface of a sample (12) with illuminant light, detect the radiation scattered by the surface of said sample (12) following such irradiation, and then determine the reflectance of the surface of said sample (12), said method comprising the following steps:
- determining (110) the roughness geometric profile of the surface of said sample (12);
- determining (120) a compensated reflectance of the surface of said sample on the basis of the scattered radiation detected by said spectrophotometer (20) and of the determined roughness geometric profile.

9. Method (100) according to claim 8 wherein the step of roughness detection (110) comprises the following steps:
- acquiring (111) at least one stereoscopic image of at least a portion of the surface of said sample (12);
- processing (112) said at least one stereoscopic image so as to determine the roughness geometric profile of the surface of the sample (12);
said method (100) further comprising the step of:
- determining (113) the intensity of the specularly reflected radiation detected by the spectrophotometer (20) on the basis of said roughness geometric profile determined.

10. Method (100) according to any one of the preceding claims wherein it comprises the steps:
- comparing (114) the determined roughness geometric profile with historical roughness data;
- sending (115) a caution alarm if the determined roughness geometric profile exceeds predefined tolerance data.
